# FASCICULE DE BREVET EUROPEEN

(11) **EP 3 707 482 B1**
(45) Date de publication et mention de la délivrance du brevet: **07.06.2023**
(21) Numéro de dépôt: 18812245.1
(22) Date de dépôt: 07.11.2018
(51) Int. Cl.: G01G 23/01

(54) **DISPOSITIF D'ETALONNAGE D'UN ÉQUIPEMENT DE PESEE INDUSTRIEL COMPRENANT DES MOYENS DE CONTRE-POUSSEE ET PROCEDE D'ETALONNAGE AU MOYEN D'UN TEL DISPOSITIF**
KALIBRIERVORRICHTUNG FÜR EINE INDUSTRIELLE WÄGEVORRICHTUNG MIT MITTELN UM GEGENDRUCK ZU ERZEUGEN UND KALIBRIERVERFAHREN DURCH SOLCH EINE VORRICHTUNG.
CALIBRATION DEVICE FOR AN INDUSTRIAL WEIGHING EQUIPMENT WITH COUNTERPRESSURE MEANS AND CALIBRATION METHOD BY SUCH A DEVICE.

(30) Priorité: 08.11.2017 FR 1760490
(43) Date de publication de la demande: 16.09.2020
(73) Titulaire: Centre d'Etudes et de Recherches de l'Industrie du Béton, 28233 Epernon (FR)
(72) Inventeur: TEMPETE, Nicolas, 28210 Brechamps (FR)
(74) Mandataire: IP Trust
(86) Numéro de dépôt international: PCT/FR2018/052751
(87) Numéro de publication internationale: WO 2019/092362

(56) Documents cités:
- WO-A1-2004/088259
- DE-A1- 3 447 382
- DE-U1- 29 712 785
- FR-A1- 2 682 475

## Description

### DOMAINE TECHNIQUE DE L'INVENTION

L'invention concerne un dispositif d'étalonnage pour étalonner un équipement de pesée industriel.

Par équipement de pesée industriel, on entend un équipement de pesée apte à peser une charge supérieure ou égale à 200 kg. L'équipement de pesée industriel peut être par exemple une bascule, une trémie, un tapis peseur, ou tout autre équipement permettant de recevoir des charges lourdes.

Le dispositif d'étalonnage est destiné notamment, mais non exclusivement, à étalonner une bascule industrielle destinée à peser des matériaux de construction tels que des constituants du béton.

### ETAT DE LA TECHNIQUE

Dans le cas de bascules utilisées pour le pesage de matériaux de construction, il est procédé à la vérification de la concordance du signal de pesée délivré par la bascule au moyen de masses étalonnées généralement en fonte. Pour ce faire, les masses sont disposées manuellement ou automatiquement sur le plateau de la bascule. L'inconvénient de cette technique est qu'il faut manipuler des masses correspondant à la plage de pesée maximale de la bascule. S'agissant de bascule industrielle, les capacités de charge sont élevées, ce qui génère des difficultés dans la manipulation des masses. Cela impose en outre une manutention sur place importante, tant sur le plan humain que sur le plan mécanique.

Afin de palier ces inconvénients, des dispositifs d'étalonnage ont été développés pour assurer la vérification du fonctionnement d'une bascule industrielle. De manière générale, les dispositifs d'étalonnage développés comprennent des moyens exerçant ou bien une poussée ou bien une traction sur l'équipement de pesée selon leur arrangement par rapport à l'équipement de pesée de sorte à simuler une charge de pesée qui serait placée dans la bascule. A titre d'exemple, il peut être cité les demandes de brevet FR2682475 et WO2004/088259. On connait également la demande de brevet DE29712785U1

L'inconvénient de ces dispositifs d'étalonnage de l'art antérieur est qu'ils requièrent l'interruption de l'opération de pesage et/ou le retrait de toute charge placée sur la bascule, ces dernier venant exercer un effort (poussée ou traction) pour simuler la présence de la charge.

L'invention vise à remédier à ces problèmes en proposant un dispositif d'étalonnage permettant de procéder à l'étalonnage d'un équipement de pesée conjointement à l'opération de pesée des constituants à peser.

### OBJET DE L'INVENTION

A cet effet, et selon un premier aspect, l'invention propose un dispositif d'étalonnage pour étalonner un équipement de pesée industriel comprenant un plateau de réception de charge, ledit équipement présentant un arrangement tel qu'un espace libre est réservé sous ledit plateau, ledit dispositif étant remarquable en ce qu'il comprend des moyens de contre-poussée d'une charge disposée sur l'équipement de pesée, les moyens de contre-poussée comprenant au moins trois vérins de poussée de charge instrumentés chacun d'un capteur d'effort.

Avantageusement, les vérins de poussée sont mécaniques. Les vérins de poussée peuvent bien entendu également être du type autre que mécanique comme par exemple hydraulique ou pneumatique.

Avantageusement, le capteur d'effort de chaque vérin de poussée est centré axialement par rapport au vérin de poussée associé.

Avantageusement, les capteurs d'effort sont reliés à un système d'acquisition et de traitement en vue de la caractérisation d'un éventuel écart de mesure de charge entre l'effort de poussée exercé par les vérins de poussée et la charge mesurée par l'équipement de pesée avant la mise en poussée des vérins de poussée.

L'invention concerne également un procédé d'étalonnage d'un équipement de pesée industriel comprenant un plateau de réception de charge, ledit équipement présentant un arrangement tel qu'un espace libre est réservé sous ledit plateau, remarquable en ce qu'il comprend les étapes suivantes :
- chargement de l'équipement de pesée à une valeur de chargement maximale correspondant à la capacité maximale d'utilisation avec, préalablement, une opération de mise à zéro d'un système de mesure de l'équipement de pesée et de mise à zéro d'un dispositif d'étalonnage tel que décrit précédemment, placé dans l'espace libre, sous le plateau de réception de charge,
- mise en charge des vérins de poussée de charge jusqu'à atteindre un signal relevé par les capteurs d'efforts de chaque vérin de poussée de charge correspondant à la valeur maximale de chargement.

Avantageusement, la mise en charge des vérins de poussée de charge est progressive, avec au moins un point d'arrêt intermédiaire de sorte à établir en temps réel l'écart de mesure entre le système de mesure de l'équipement de pesée et la valeur de poussée appliquée par les vérins de poussée de charge correspondant au signal mesuré par les capteurs d'effort associés.

Avantageusement, les étapes sont reproduites au moins deux fois afin de déterminer les erreurs de répétabilité.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique d'un dispositif d'étalonnage selon l'invention mis en oeuvre avec un équipement de pesée formé d'une trémie peseuse ;
- les figures 2a à 2d représentent les opérations d'étalonnage de l'équipement de pesée illustré sur la figure 1 à l'aide du dispositif d'étalonnage, ledit équipement de pesée ne présentant pas d'erreur de mesure ;
- les figures 3a à 3d représentent les opérations d'étalonnage de l'équipement de pesée à l'aide du dispositif d'étalonnage mettant en évidence une erreur de mesure de l'équipement de pesée ;
- la figure 4 représente une vue schématique d'un dispositif d'étalonnage selon l'invention mis en oeuvre avec un équipement de pesée formé d'un tapis peseur suspendu.

Pour plus de clarté, les éléments identiques ou similaires des différents modes de réalisation sont repérés par des signes de référence identiques sur l'ensemble des figures.

### DESCRIPTION DETAILLEE DES FIGURES

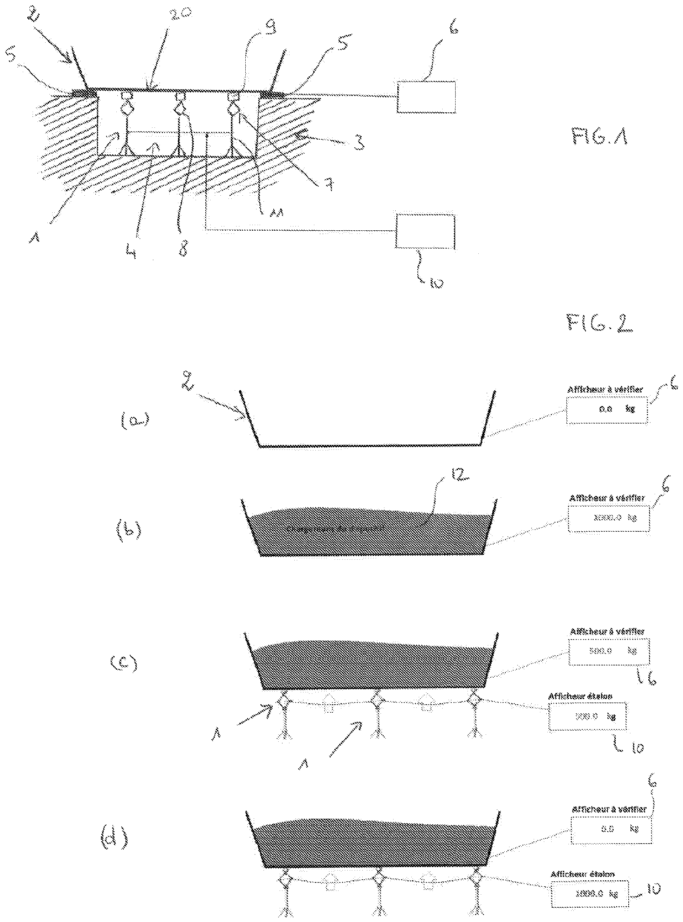

La figure 1 illustre un dispositif d'étalonnage 1 mis en oeuvre avec un équipement de pesée présentant un arrangement tel qu'un espace 4 libre est réservé sous le plateau 20 de réception de charge dudit équipement.

Dans le mode de réalisation illustré, l'équipement de pesée comprend une trémie peseuse 2 reposant sur le sol 3, au-dessus d'un espace 4 définissant une fosse. La charge à peser disposée sur le plateau de réception 20 est mesurée par l'intermédiaire de cellules de pesée 5, du type jauges extensométriques, disposées entre la trémie peseuse 2 et le sol 3, et raccordées à un système de mesure 6 configuré pour indiquer, à partir du signal transmis par les cellules de pesée 5 et proportionnel à la charge appliquée à peser, une valeur de masse affichable sur un écran. L'équipement de pesée auquel le dispositif d'étalonnage 1 est destiné est un équipement industriel. Il est destiné à peser des charges lourdes, comme par exemple des constituants du béton. Par charges lourdes, on entend des charges supérieure ou égale à 200 kg.

Le dispositif d'étalonnage 1 selon l'invention comprend des moyens de contre-poussée 7 de charge destinés à appliquer une contre-poussée de la charge placée sur la trémie peseuse 2. Les moyens de contre-poussée 7 comportent des vérins de poussée 8 de charge qui sont respectivement instrumentés d'un capteur d'effort 9.

Chacun des capteurs d'effort 9 est relié à un système d'acquisition et de traitement de données 10 pour établir la charge équivalente à la contre-poussée exercée par chacun des vérins de poussée. Le système d'acquisition et de traitement de données 10 comporte en outre des moyens permettant de caractériser l'éventuel écart de mesure entre le système de mesure 6 de l'équipement de pesée et les capteurs d'efforts 9 de chacun des vérins de poussée 8 de charge à l'issue de l'opération de vérification de l'étalonnage de l'équipement de mesure. Dans l'exemple illustré, le dispositif d'étalonnage 1 comporte trois vérins de poussée 8 de charge. Le capteur d'effort 9 de chaque vérin de poussée 8 de charge est de préférence centré axialement par rapport au vérin de poussée auquel il est associé.

Selon une configuration préférée, les vérins sont mécaniques. Il est bien entendu évident que l'invention ne se limite pas à ce type de vérins, d'autres types de vérins, comme par exemple hydrauliques, pouvant être mise en oeuvre sans sortir du cadre de l'invention.

Avantageusement, le dispositif d'étalonnage est réglable en hauteur. Le réglage s'effectue par la mise en oeuvre de moyens connus comme par exemple un système d'étai télescopique 11.

En relation avec les figures 2a à 2d, il est décrit les opérations d'étalonnage de l'équipement de pesée à l'aide du dispositif d'étalonnage 1.

Le procédé d'étalonnage consiste dans un premier temps à charger de le plateau 20 de la trémie peseuse 2 avec une charge 12 correspondant à la capacité maximale d'utilisation avec le ou les constituants à peser (figure 2b). Préalablement au chargement, il aura été procédé à une opération de mise à zéro du système de mesure 6 de l'équipement de pesée (figure 2a).

Une fois la trémie peseuse 2 chargée, le dispositif d'étalonnage 1 est placé sous le plateau 20 chargé de la trémie peseuse 2.

Le dispositif d'étalonnage 1 est réglé de manière à venir au voisinage du plateau 20 chargé par réglage des vérins de poussée 8 en hauteur. Une fois en place, le dispositif d'étalonnage 1 est mis à zéro.

Le dispositif d'étalonnage 1 est ensuite mis en charge. Par « mis en charge », on entend que le fait que les vérins de poussée 8 de charge exercent une contre-poussée de la charge 12 placée sur le plateau 20 de la trémie peseuse 2. La contre-poussée est représentée par les flèches dirigées vers le haut. La mise en charge des vérins de poussée 8 de charge est progressive. Elle est réalisée avec autant de points d'arrêts souhaités. Dans l'exemple illustré, il est procédé à un seul point d'arrêt intermédiaire (figure 2c) avant d'atteindre la valeur de charge initiale (figure 2d). Les points d'arrêts intermédiaires permettent de déduire l'erreur de justesse en temps réel. Dans l'exemple illustré, le point d'arrêt est réalisé à demi-charge. Le système de mesure 6 de l'équipement de pesée affichant la même masse que celle mesurée via le système d'acquisition et de traitement de données 10 du dispositif d'étalonnage 1, soit 500 kg, on en déduit, à mi-contre-poussée, une erreur de 0% du système de mesure 6.

Le dernier point de mesure est réalisé lorsque le signal relevé par les capteurs d'efforts de chaque vérin de poussée 8 de charge correspond à la valeur maximale de chargement. Dans l'exemple illustré, la valeur affichée par le système de mesure de l'équipement de pesée est de 0 kg tandis que celle de l'afficheur du dispositif d'étalonnage 1 affiche 1000 kg, laquelle valeur correspond à la charge 12 initialement placée sur le plateau 20. Cela permet ainsi d'établir que l'équipement testé ne génère pas d'erreur de pesée.

A contrario, dans l'exemple 3a à 3d, il est constaté que la charge affichée par le dispositif d'étalonnage 1 correspondant à la masse de la charge 12 initialement mesurée par le système de mesure 6 de l'équipement de pesée ne « compense » pas totalement le système de mesure 6 : ce dernier affiche une masse restante de 100 kg alors que le système d'acquisition et de traitement de données 10 du dispositif d'étalonnage 1 affiche une valeur de masse correspondant à la valeur initiale de chargement. On en déduit que l'équipement testé génère une erreur de pesée. En l'espèce, dans l'exemple illustré, l'erreur de pesée est de 10%.

Afin de déterminer les erreurs de répétabilité, les opérations précédemment décrites sont reproduites au moins deux fois.

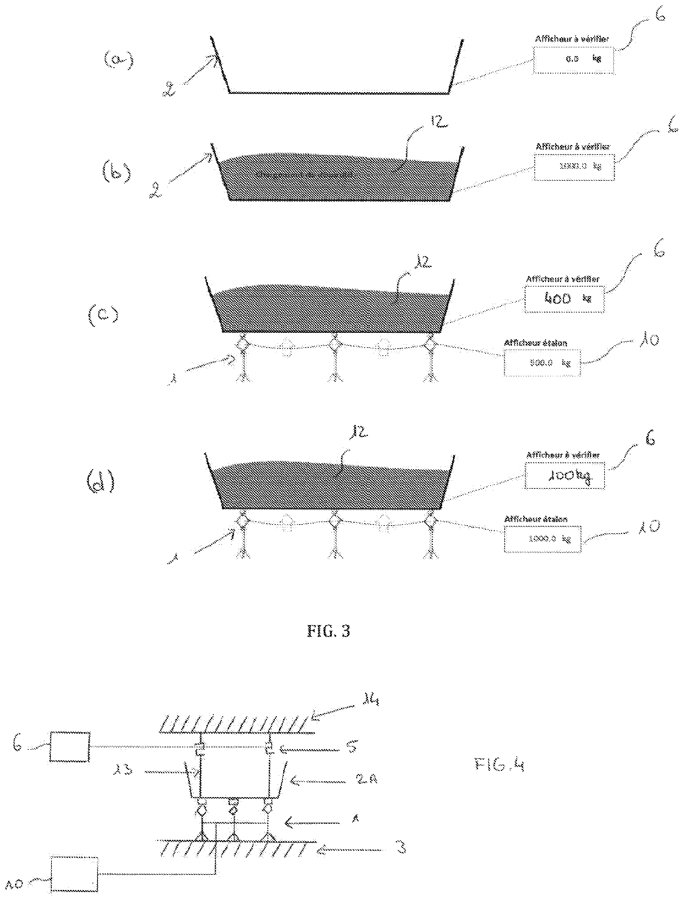

Dans le mode de réalisation venant d'être décrit, la trémie peseuse 2 formant le réceptacle de pesée est posée sur les cellules de pesée 5, ces dernières étant sollicitées en compression. La figure 4 illustre la mise en oeuvre d'un dispositif d'étalonnage selon l'invention avec un tapis suspendu 2A. Dans ce cas, les cellules de pesée 5, associés aux suspentes 13 maintenant le tapis à un support 14 surélevé par rapport au sol 3, sont sollicitées en traction.

## Revendications

1. Dispositif d'étalonnage (1) pour étalonner un équipement de pesée industriel comprenant un plateau (20) de réception de charge et un système de mesure (6), ledit équipement présentant un arrangement tel qu'un espace libre est réservé sous ledit plateau, **caractérisé en ce qu'**il comprend des moyens de contre-poussée d'une charge disposée sur l'équipement de pesée, les moyens de contre-poussée comprenant au moins trois vérins de poussée (8) de charge, chacun étant instrumenté d'un capteur d'effort (9), chacun des capteurs d'effort (9) étant relié à un système d'acquisition et de traitement pour établir la charge équivalente à la contre-poussée exercée par chacun des vérins de poussée (8) de charge en vue de la caractérisation d'un éventuel écart de mesure de charge entre l'effort de poussée exercé par les vérins de poussée (8) de charge et la charge mesurée par le système de mesure (6) de l'équipement de pesée avant la mise en poussée des vérins de poussée (8) de charge.

2. Dispositif d'étalonnage (1) selon la revendication 1, **caractérisé en ce que** le capteur d'effort (9) de chaque vérin de poussée de charge (8) est centré axialement par rapport au vérin de poussée associé.

3. Procédé d'étalonnage d'un équipement de pesée industriel à l'aide d'un dispositif d'étalonnage selon la revendication 1 ou la revendication 2, ledit équipement comprenant un plateau (20) de réception de charge et présentant un arrangement tel qu'un espace libre est réservé sous ledit plateau, **caractérisé en ce qu'**il comprend les étapes suivantes :
- chargement de l'équipement de pesée à une valeur de chargement maximale correspondant à la capacité maximale d'utilisation avec, préalablement, une opération de mise à zéro d'un système de mesure (6) de l'équipement de pesée et de mise à zéro du dispositif d'étalonnage (1) placé dans l'espace libre, sous le plateau (20) de réception de charge,
- mise en charge des vérins de poussée (8) de charge jusqu'à atteindre un signal relevé par les capteurs d'efforts (9) de chaque vérin de poussée de charge correspondant à la valeur maximale de chargement,
- établissement de la charge équivalente à la contre-poussée exercée par chacun des vérins de poussée (8) de charge par le système d'acquisition et de traitement en vue de la caractérisation d'un éventuel écart de mesure de charge entre l'effort de poussée exercé par les vérins de poussée (8) de charge et la charge mesurée par l'équipement de pesée avant la mise en poussée des vérins de poussée (8) de charge.

4. Procédé d'étalonnage selon la revendication 3, **caractérisé en ce que** la mise en charge des vérins de poussée (8) de charge est progressive, avec au moins un point d'arrêt intermédiaire de sorte à établir en temps réel l'écart de mesure entre le système de mesure (6) de l'équipement de pesée (2) et la valeur de poussée appliquée par les vérins de poussée (8) de charge correspondant au signal mesuré par les capteurs d'effort (9) associés.

5. Procédé d'étalonnage selon la revendication 3 ou la revendication 4, **caractérisé en ce que** les étapes sont reproduites au moins deux fois afin de déterminer les erreurs de répétabilité.

## Patentansprüche

1. Kalibriervorrichtung (1) zum Kalibrieren einer industriellen Wägeausrüstung, umfassend eine Platte (20) für eine Lastaufnahme und ein Messsystem (6), wobei die Ausrüstung so angeordnet ist, dass unter der Platte ein freier Raum reserviert ist, **dadurch gekennzeichnet, dass** sie Mittel zum Erzeugen von Gegendruck zu einer auf der Wägeausrüstung eingerichteten Last umfasst, die Mittel zum Erzeugen von Gegendruck umfassend mindestens drei Lastdruckzylinder (8), von denen jeder mit einem Kraftsensor (9) ausgestattet ist, wobei jeder der Kraftsensoren (9) mit einem Erfassungs- und Verarbeitungssystem verbunden ist, um die äquivalente Last zu dem Gegendruck, der durch jeden der Lastdruckzylinder (8) ausgeübt wird, zwecks der Kennzeichnung einer eventuellen Lastmessabweichung zwischen der durch die Lastdruckzylinder (8) ausgeübten Druckkraft und der durch das Messsystem (6) der Wägeausrüstung gemessenen Last vor der Druckbeaufschlagung der Lastdruckzylinder (8) zu ermitteln.

2. Kalibriervorrichtung (1) nach Anspruch 1, **dadurch gekennzeichnet, dass** der Kraftsensor (9) jedes Lastdruckzylinders (8) axial zu dem zugehörigen Druckzylinder zentriert ist.

3. Verfahren zum Kalibrieren einer industriellen Wägeausrüstung mit Hilfe einer Kalibriervorrichtung nach Anspruch 1 oder 2, wobei die Ausrüstung eine Platte (20) für die Lastaufnahme umfasst und so angeordnet ist, dass unter der Platte ein freier Raum reserviert ist, **dadurch gekennzeichnet, dass** es die folgenden Schritte umfasst:
- Beladen der Wägeausrüstung mit einem maximalen Beladungswert, der der maximalen Nutzungskapazität entspricht, mit, zuvor, einem Vorgang eines Nullstellens eines Messsystems (6) der Wägeausrüstung und des Nullstellens der Kalibriervorrichtung (1), die in dem freien Raum unter der Platte (20) für die Lastaufnahme platziert ist,
- Belasten der Lastdruckzylinder (8) bis zum Erreichen eines von den Kraftsensoren (9) jedes Lastdruckzylinders abgelesenen Signals, das dem maximalen Wert der Beladung entspricht,
- Ermitteln der äquivalenten Last zu dem Gegendruck, der durch jeden der Lastdruckzylinder (8) ausgeübt wird, durch das Erfassungs- und Verarbeitungssystem zwecks der Kennzeichnung einer eventuellen Lastmessabweichung zwischen der durch die Lastdruckzylinder (8) ausgeübten Druckkraft und der durch die Wägeausrüstung gemessenen Last vor der Druckbeaufschlagung der Lastdruckzylinder (8).

4. Kalibrierverfahren nach Anspruch 3, **dadurch gekennzeichnet, dass** das Belasten der Lastdruckzylinder (8) schrittweise erfolgt, mit mindestens einem Zwischenhaltepunkt, um in Echtzeit die Messabweichung zwischen dem Messsystem (6) der Wägeausrüstung (2) und dem Wert der durch die Lastdruckzylinder (8) ausgeübten Druckkraft entsprechend dem durch den zugehörigen Kraftsensoren (9) gemessenen Signal zu ermitteln.

5. Kalibrierverfahren nach Anspruch 3 oder 4,
**dadurch gekennzeichnet, dass** die Schritte mindestens zweimal wiederholt werden, um die Repetierbarkeitsfehler zu bestimmen.

## Claims

1. A calibration device (1) for calibrating an industrial weighing assembly comprising a load-receiving tray (20) and a measuring system (6), said assembly being arranged such that a free space is provided under said tray,
**characterized in that** the device comprises counter-thrust means for a load arranged on the weighing assembly, the counter-thrust means comprising at least three load thrust cylinders (8), each being provided with a force sensor (9), each of the force sensors (9) being connected to an acquisition and processing system in order to establish the load equivalent to the counter-thrust exerted by each of the load thrust cylinders (8) in order to characterize a possible load measurement deviation between the thrust force exerted by the load thrust cylinders (8) and the load measured by the measuring system (6) of the weighing assembly before the load thrust cylinders (8) are pushed.

2. The calibration device (1) according to claim 1, **characterized in that** the force sensor (9) of each load thrust cylinder (8) is centered axially relative to the associated thrust cylinder.

3. A method for calibrating an industrial weighing assembly using a calibration device according to either claim 1 or claim 2, said assembly comprising a load-receiving tray (20) and being arranged such that a free space is provided under said tray, **characterized in that** the method comprises the following steps: - loading the weighing assembly to a maximum loading value corresponding to the maximum usage capacity together with, beforehand, an operation of zeroing a measuring system (6) of the weighing assembly and zeroing the calibration device (1) placed in the free space, under the load-receiving tray (20),
- loading the load thrust cylinders (8) until a signal picked up by the force sensors (9) of each load thrust cylinder corresponding to the maximum loading value is reached,
- establishing the load equivalent to the counter-thrust exerted by each of the load thrust cylinders (8) by means of the acquisition and processing system in order to characterize a possible load measurement deviation between the thrust force exerted by the load thrust cylinders (8) and the load measured by the weighing assembly before the load thrust cylinders (8) are pushed.

4. The calibration method according to claim 3, **characterized in that** the loading of the load thrust cylinders (8) is gradual, with at least one intermediate stop point so as to establish, in real time, the measurement deviation between the measuring system (6) of the weighing assembly (2) and the thrust value applied by the load thrust cylinders (8) corresponding to the signal measured by the associated force sensors (9).

5. The calibration method according to either claim 3 or claim 4, **characterized in that** the steps are reproduced at least twice in order to determine the repeatability errors.
